Europäisches Patentamt

(19) European Patent Office

Office européen des brevets

(11) Veröffentlichungsnummer: **0 034 847**
**A1**

(12) EUROPÄISCHE PATENTANMELDUNG

(21) Anmeldenummer: 81200133.7

(22) Anmeldetag: 04.02.81

(51) Int. Cl.³: **B 22 F 7/08**
**B 65 G 33/26**

(30) Priorität: 19.02.80 DE 3006101

(43) Veröffentlichungstag der Anmeldung:
02.09.81 Patentblatt 81/35

(84) Benannte Vertragsstaaten:
AT BE CH DE FR GB IT LI LU NL SE

(71) Anmelder: METALLGESELLSCHAFT AG
Reuterweg 14 Postfach 3724
D-6000 Frankfurt/M.1(DE)

(72) Erfinder: Kruske, Gerhard, Ing.grad.
Maurerweg 28
D-6370 Oberursel (Ts)(DE)

(72) Erfinder: Weitershagen, F.J.
Pfälzer Weg 23a
D-4330 Mülheim/R.-Saarn(DE)

(74) Vertreter: Fischer, Ernst, Dr.
Reuterweg 14
D-6000 Frankfurt am Main 1(DE)

(54) Werkstücke mit gepanzerten Kanten und/oder Flächen.

(57) Die Kanten und/oder Flächen von dem Verschleiß unterworfenen Werkstücken z.B. Förderschnecken (1) sind mit durch Schweißen aufgetragenen Hartmetallegierungen oder Gemischen aus einer Hartlegierung mit Hartstoffen gepanzert.

Um den technischen Aufwand zu reduzieren, besteht die Panzerung aus mit dem Werkstück (1) verbundenen Profilen bzw. Profilabschnitten (4) der Hartlegierungen bzw. Hartlegierungen mit Hartstoffen.

Zur Herstellung der Profile bzw. Profilabschnitte (4) wird die pulver- oder pastenförmige Hartlegierung in eine entsprechend gestaltete Form eingebracht und gesintert.

Fig.1

EP 0 034 847 A1

0034847

METALLGESELLSCHAFT
Aktiengesellschaft
Reuterweg 14
6000 Frankfurt/Main 1

14.02.1980
-DRQ/GKP-

Prov. Nr. 8458 LT

Werkstücke mit gepanzerten Kanten und/oder Flächen
------------------------------------------------------

Die Erfindung betrifft Werkstücke, insbesondere Förderschnecken, deren dem Verschleiß unterworfenen Kanten und/
oder Flächen mit Hartmetallegierungen oder Gemischen aus
einer Hartmetallegierung mit Hartstoffen gepanzert sind.

Der Verschleiß von mit Hartmetallegierungen, wie z.B.
Chrom-Nickel-Bor- oder Kobalt-Chrom-Wolfram-Legierungen,
die gegebenenfalls noch Hartstoffe wie beispielsweise
Wolframkarbid enthalten können, bereitet immer dann
Schwierigkeiten, wenn es sich um Werkstücke handelt, deren
gepanzerte Kanten scharf sein und bei denen die Panzerung
bestimmte Dicken mit sehr kleinem Fehlerbereich aufweisen
müssen, wie dies beispielsweise beim Verschleiß von
Zentrifugen, Dekanterschnecken, Erdbohrern, Gesteinsbohrern oder ähnlichen Werkstücken der Fall ist.

In der Praxis ist es üblich, die Panzerung von Werkstücken
durch mehrlagiges Auftragsschweißen einer entsprechenden
Hartmetallegierung vorzunehmen. Bekannt ist auch, daß
die Panzerung aus einer mehrlagig aufgeschweißten
Zwischenschicht aus z.B. einer Chrom-Nickel-Bor-Legierung
besteht und darauf eine Schicht aus z.B. in Stahl oder
einer Hartmetallegierung eingebettetem Hartstoff, wie
Wolframkarbid, aufgebracht ist. Da die durch Auftragsschweißen hergestellte Panzerung relativ unregelmäßig

- 2 -

ausgebildet ist, sind aufwendige Schleifarbeiten erforderlich, um die Dicke der Panzerung sowie die scharfen Kanten herzustellen.

Es liegt auf der Hand, daß durch diese Schleifarbeiten gerade die Schichten abgetragen werden, die sich durch hohe Härte auszeichnen und die durch die Panzerung gewollt erzeugt worden sind. Darüber hinaus erfordert die Mehrlagenschweißung einen erheblichen Aufwand an Zeit, zumal die beispielsweise mit Wolframkarbid als Hartstoff gefüllten Röhrenschweißstäbe sehr schwierig und mit geringer Schweißgeschwindigkeit zu verarbeiten sind. Ein Panzern von Werkstücken mit präzise ausgebildeten Schichten hinsichtlich ihrer Abmessungen ist deshalb mühevoll und teuer. Dazu kommt noch, daß beispielsweise bei der Verwendung von in Stahl eingebettetem Wolframkarbid beim Schleifen die Wolframkarbidteilchen aus dem Verbund herausgebrochen werden, so daß die Panzerung nach der Schleifbehandlung nicht mehr den Anforderungen voll gerecht wird, Löcher aufweist und das Werkstück als unverwendbar ausgesondert werden muß. Außerdem garantiert das manuelle Auftragsschweißen keine gleichmäßige Verteilung der Hartstoffe, beispielsweise der Karbide. Infolgedessen liegt stellenweise bei hoher Karbidkonzentration zu wenig Einbettmasse vor, während die an Karbiden verarmten Stellen vorzeitigem betrieblichem Verschleiß ausgesetzt sind. Im übrigen treten beim Auftragsschweißen unvermeidbare Schweißspannungen auf.

Bei dem in der DE-PS 19 21 568 beschriebenen Verfahren ist vorgesehen, das zu panzernde Werkstück in einem der jeweiligen gewünschten Panzerdicken entsprechenden Abstand mit einer Form zu umgeben und in den zwischen Werkstück und Form gebildeten Hohlraum die zum Panzern bestimmte Masse einzubringen, anschließend zu sintern und dann die Form abzuschleifen. Die Anwendung dieser Maßnahmen ist mit einem relativ hohen Zeitaufwand verbunden, da das Anbringen der Form, das Füllen des zwischen Werkstück und Form bestehenden Hohlraums und das anschließende Abschleifen der Form relativ arbeitsintensiv ist.

Es ist die Aufgabe der vorliegenden Erfindung, die Panzerung von dem Verschleiß unterliegenden Kanten und/oder Flächen von Werkstücken so auszubilden, daß das Auftragsschweißen entfallen, der technische Aufwand reduziert und eine mechanische Nachbearbeitung der Panzerung weitgehend unterbleiben kann.

Gelöst wird diese Aufgabe dadurch, daß die Panzerung aus mit den Werkstücken verbundenen Profilen bzw. Profilabschnitten besteht, deren Form vorzugsweise der Form der Kanten und/oder Flächen angepaßt ist.

Als besonders geeignet haben sich Profile bzw. Profilabschnitte in Gestalt von Stäben oder Drähten erwiesen.

Im Querschnitt sind die Profile bzw. Profilabschnitte rechteckig, trapezförmig, kreisförmig, kreisabschnittförmig, U-förmig oder dergleichen ausgebildet.

Eine Abwandlung der Erfindung, bei der die Panzerung über ein Stahlzwischenstück mit dem Werkstück verbunden ist, hat sich als besonders vorteilhaft hinsichtlich der Festigkeit der Verbindung mit dem Werkstück als auch hinsichtlich der Verschleißfestigkeit erwiesen, wobei die Verbindung zwischen Panzerung und Stahlzwischenstück über eine intermetallische Zwischenschicht erfolgt. Dabei kann das Profil ganz oder teilweise von der Stahlschicht umgeben sein.

Die Panzerung ist auf das Werkstück aufgeschweißt, aufgenietet, aufgelötet, aufgeklebt, aufgeschraubt oder mechanisch daran angeklammert.

Die Profile bzw. Profilabschnitte werden vorzugsweise in der Weise hergestellt, daß die Legierung in Pulver- oder Pastenform in eine entsprechend dem Profil gestaltete Form eingebracht und auf Sintertemperatur aufgeheizt wird. Um die intermetallische Verbindung zwischen den Profilen bzw. Profilabschnitten und dem Stahlzwischenstück herzustellen, wird dieses mit in die entsprechend geänderte Form hineingelegt. Durch den Sintervorgang bildet sich eine intermetallische Verbindung zwischen Stahlstück und Profil.

Die Profile bzw. Profilabschnitte können auch durch Gießen, Stranggießen, Strangpressen, isostatisches Pressen, Ziehen aus der Schmelze oder Walzen hergestellt werden.

Die mit der Erfindung erzielten Vorteile bestehen darin, daß durch die Verwendung von Profilen bzw. Profilabschnitten für die Panzerung eine hohe Formgenauigkeit erzielt wird, so daß nur z.B. bei Schnecken, die in Zentrifugen mit sehr engem Spalt eingesetzt sind, ein Korrekturschliff gelegentlich erforderlich ist. Entscheidend ist jedoch die erzielte Reduzierung des technischen Aufwands, die zu einer Kostenreduzierung von bis zu 75 % führt. Darüber hinaus lassen sich im Falle einer Reparatur die Profile relativ schnell auswechseln. Ferner ist es möglich, an einem Werkstück Profile unterschiedlicher Hartstofflegierungen einzusetzen und damit eine optimale Anpassung an die jeweils überwiegende Verschleißart, wie Korrosions-, Abrasions-, Erosions- oder Kavitations-Verschleiß, zu erzielen.

Die Erfindung ist in den Zeichnungen näher und beispielhaft erläutert:

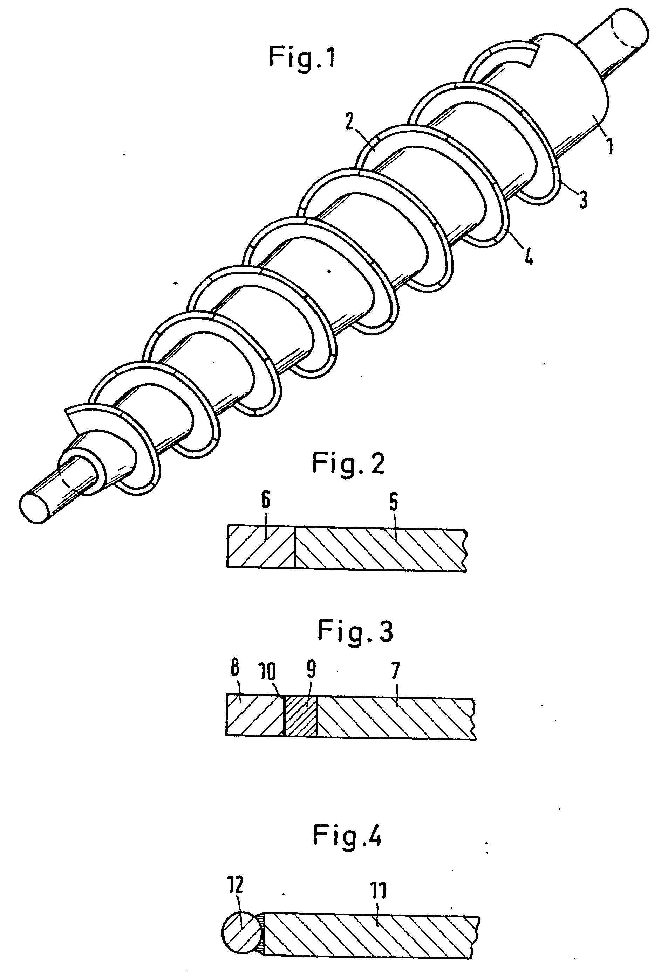

Fig. 1 zeigt die perspektivische Darstellung einer Förderschnecke, bestehend aus dem Schneckenkörper 1 und dem darauf befindlichen Schneckengang 2, dessen scharfe Kante 3 mit Profilabschnitten einer Hartlegierung auf Nickel-Chrom-Bor-Basis gepanzert ist.

In Fig. 2 ist ein Querschnitt durch einen Schneckengang 5 dargestellt, dessen Verschleißkante mit einem angeschweißten Rechteckprofilstab 6 einer Hartmetallegierung gepanzert ist.

Die Fig. 3 zeigt einen Querschnitt durch einen Schneckengang 7, dessen Verschleißkante mit einem Rechteckprofilstab 8 einer Hartmetallegierung gepanzert ist, dabei ist der Profilstab über eine Stahlzwischenschicht 9, mit der dieser über eine intermetallische Schicht 10 verbunden ist, am Schneckengang angeschweißt.

In Fig. 4 ist ein Querschnitt durch den Schneckengang 11 wiedergegeben, dessen Verschleißkante mit einem angeschweißten Rundprofildraht 12 gepanzert ist.

Fig. 5 gibt einen Querschnitt durch den Schneckengang 13 wieder, dessen Verschleißkante sowie der benachbarte Flankenteil mit einem winkelförmig gestalteten Profilstab 14 gepanzert sind.

Die Fig. 6 zeigt einen Querschnitt durch einen Schneckengang 15, dessen Verschleißkante mit einem rechteckigen Profilstab 16, der mit einem Stahlzwischenstück 17 intermetallisch verbunden ist, bewehrt ist. Das Stahlzwischenstück 17 ist an der Flanke des Schneckengangs angeschweißt.

In Fig. 7 und 8 sind Schneckengänge 18, 19 dargestellt, bei denen die Verschleißkanten mit einem Rundprofildraht 20 bzw. Rechteckprofilstab 21, die von einer mit dem Schneckengang verschweißten Stahlzwischenschicht 22, 23 umgeben sind, gepanzert sind. Die Stahlzwischenschicht bildet mit den Profilstäben eine intermetallische Verbindung.

In dem in Fig. 9 wiedergegebenen Querschnitt eines Schneckenganges 24 ist das U-förmig ausgebildete Panzerprofil 25 über ein auf dem Schneckengang aufgeschweißtes Stahlzwischenstück 26 mit dem Schneckengang verbunden. Zwischen dem Stahlzwischenstück und der Panzerung besteht ein intermetallischer Verbund.

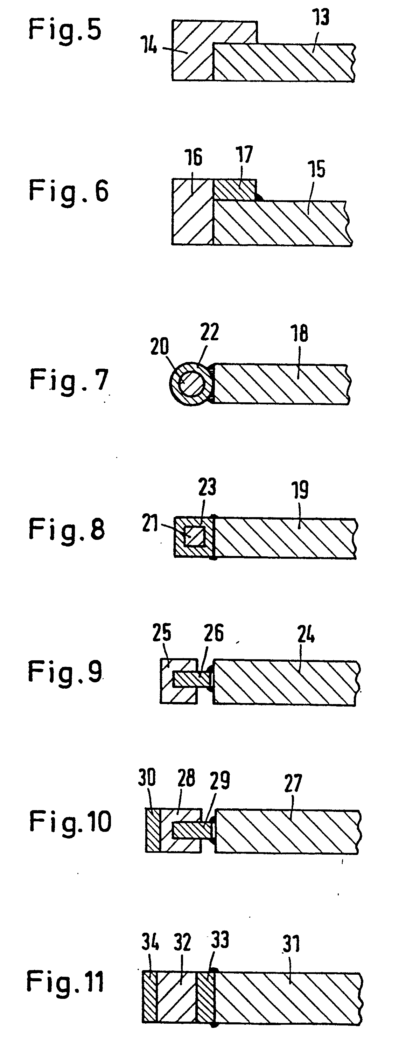

Bei dem in Fig. 10 wiedergegebenen Querschnitt eines Schneckenganges 27 ist das U-förmig gestaltete Panzerprofil 28 über das Stahlzwischenstück 29 mit dem Schneckengang verbunden, wobei auf dem Außenumfang der Panzerung eine ebenfalls mit dieser intermetallisch verbundene Stahlschicht 30 angeordnet ist.

Fig. 11 zeigt einen Querschnitt durch einen Schneckengang 31, dessen Kante mit einem Rechteckprofil 32, das über eine Stahlzwischenschicht 33 mit dem Schneckengang verbunden ist, gepanzert ist. Auf dem Außenumfang des Rechteckprofils befindet sich eine Stahlschicht 34.

PATENTANSPRÜCHE
---------------

1. Werkstücke, insbesondere Förderschnecken, deren dem
   Verschleiß unterworfenen Kanten und/oder Flächen mit
   Hartmetallegierungen oder Gemischen aus einer Hartmetallegierung mit Hartstoffen gepanzert sind, <u>dadurch</u>
   <u>gekennzeichnet</u>, daß die Panzerung aus mit dem Werkstück
   verbundenen Profilen bzw. Profilabschnitten besteht.

2. Werkstücke nach Anspruch 1, <u>dadurch gekennzeichnet</u>,
   daß die Form der Profile bzw. Profilabschnitte der
   Form der Kanten oder Flächen angepaßt ist.

3. Werkstücke nach den Ansprüchen 1 und 2, <u>dadurch gekenn-</u>
   <u>zeichnet</u>, daß die Profile bzw. Profilabschnitte stab-
   oder drahtförmig ausgebildet sind.

4. Werkstücke nach den Ansprüchen 1 bis 3, <u>dadurch gekenn-</u>
   <u>zeichnet</u>, daß die Profile bzw. die Profilabschnitte
   einen rechteckigen, trapezförmigen, kreisabschnittförmigen, kreisförmigen, U-förmigen oder dergleichen
   Querschnitt aufweisen.

5. Werkstücke nach den Ansprüchen 1 bis 4, <u>dadurch gekenn-</u>
   <u>zeichnet</u>, daß die Panzerung über ein Stahlzwischenstück mit dem Werkstück verbunden ist.

6. Werkstücke nach Anspruch 5, <u>dadurch gekennzeichnet</u>,
   daß die Panzerung und das Stahlzwischenstück über
   eine intermetallische Schicht miteinander verbunden
   sind.

7. Werkstücke nach den Ansprüchen 5 und 6, <u>dadurch gekenn-</u>
   <u>zeichnet</u>, daß die Panzerung ganz oder teilweise von
   einer Stahlschicht umgeben ist.

0034847

8. Werkstücke nach einem oder mehreren der Ansprüche 1 bis 7, <u>dadurch gekennzeichnet</u>, daß die Panzerung mit dem Werkstück verschweißt, vernietet, verlötet, verklebt, verschraubt oder mechanisch verklammert ist.

9. Verfahren zur Herstellung der Profile bzw. Profilabschnitte nach den Ansprüchen 1 bis 7, <u>dadurch gekennzeichnet</u>, daß die Hartlegierung in eine entsprechend gestaltete Form in Pulver- oder Pastenform eingebracht und gesintert wird.

10. Verfahren zur Herstellung der Profile bzw. Profilabschnitte nach den Ansprüchen 6 und 7, <u>dadurch gekennzeichnet</u>, daß zur Herstellung der intermetallischen Verbindungsschicht zwischen den Profilen bzw. Profilabschnitten und dem Stahlzwischenstück letzteres zusammen mit der Hartmetallegierung in die entsprechend gestaltete Form eingebracht und auf Sintertemperatur erwärmt wird.

11. Verfahren zur Herstellung der Profile bzw. Profilabschnitte nach den Ansprüchen 1 bis 7, <u>gekennzeichnet durch</u> Strangpressen, isostatisches Pressen, Ziehen aus der Schmelze oder Walzen.

Fig.1

2

1

3

4

Fig.2

6 5

Fig.3

8 10 9 7

Fig.4

12 11

Fig.5

Fig.6

Fig.7

Fig.8

Fig.9

Fig.10

Fig.11

**Europäisches Patentamt**

# EUROPÄISCHER RECHERCHENBERICHT

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| P,X | Patents Abstracts of Japan Band 4, Nr. 37, 27. März 1980 Seite 141M4 & JP - A - 55 - 11133 | 1,2, 8,9 | B 22 F 7/08 B 65 G 33/26 |
| D | DE - C3 - 1 921 568 (METALLGESELLSCHAFT AG) | | |
| A | DE - C - 973 525 (DEUTSCHE EDELSTAHL-WERKE AG) | | **RECHERCHIERTE SACHGEBIETE (Int. Cl.³)** |
| A | DE - C - 675 290 (HERAEUS-VACUUM-SCHMELZE AG) | | B 22 F 5/00 B 22 F 7/00 B 65 G 33/00 |
| A | DE - C - 666 720 (HERAEUS-VACUUM-SCHMELZE AG) | | |
| A | DE - B - 1 471 078 (CHROMALLOY AMERICAN CORP.) | | |
| A | DE - A1 - 2 628 015 (I. STRAUB) | | **KATEGORIE DER GENANNTEN DOKUMENTE** |
| A | DE - A1 - 2 556 671 (BIRD MACHINE CO.) | | X: von besonderer Bedeutung A: technologischer Hintergrund O: nichtschriftliche Offenbarung |
| A | DE - U - 1 897 380 (RIETER-WERKE W. HÄNDLE KG) | | P: Zwischenliteratur T: der Erfindung zugrunde liegende Theorien oder Grundsätze E: kollidierende Anmeldung |
| A | CH - A - 221 365 (I.G. FARBENINDUSTRIE AG) ./.. | | D: in der Anmeldung angeführtes Dokument L: aus andern Gründen angeführtes Dokument &: Mitglied der gleichen Patent-familie, übereinstimmendes Dokument |

Der vorliegende Recherchenbericht wurde für alle Patentansprüche erstellt.

| Recherchenort | Abschlußdatum der Recherche | Prüfer |
|---|---|---|
| Berlin | 13-05-1981 | SIMON |

EPA form 1503.1 06.78

Europäisches
Patentamt

**EUROPÄISCHER RECHERCHENBERICHT**

Nummer der Anmeldung

EP 81 20 0133.7
- Seite 2 -

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | <u>CH - A - 36 323</u> (R. STAVENICEK)<br><br>---- | |

**KLASSIFIKATION DER ANMELDUNG** (Int. Cl.³)

**RECHERCHIERTE SACHGEBIETE** (Int. Cl.³)

EPA Form 1503.2    06.78